(19) **Europäisches Patentamt**
**European Patent Office**
**Office européen des brevets**

(11) **EP 2 700 203 B1**

(12) **EUROPEAN PATENT SPECIFICATION**

(45) Date of publication and mention
of the grant of the patent:
**08.03.2017 Bulletin 2017/10**

(21) Application number: **12715385.6**

(22) Date of filing: **17.04.2012**

(51) Int Cl.:
***H04W 28/02*** (2009.01)

(86) International application number:
**PCT/EP2012/056985**

(87) International publication number:
**WO 2012/143346 (26.10.2012 Gazette 2012/43)**

(54) **SCHEDULING PRIORITY IN A COMMUNICATIONS NETWORK**

PRIORITÄTSPLANUNG IN EINEM KOMMUNIKATIONSNETZ

PRIORITÉ D'ORDONNANCEMENT DANS UN RÉSEAU DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.04.2011 PCT/EP2011/056221**

(43) Date of publication of application:
**26.02.2014 Bulletin 2014/09**

(73) Proprietor: **Nokia Solutions and Networks Oy
02610 Espoo (FI)**

(72) Inventors:
• **SUNI, Mikko, Tapani
FI-02620 Espoo (FI)**

• **WÖLKER, Roland, Antonius
FI-02760 Espoo (FI)**
• **VUORISALO, Miika, Sakari
FI-37830 Viiala (FI)**
• **SIPILÄ, Juha, Pekka
FI-01800 Klaukkala (FI)**

(74) Representative: **Borgström, Markus et al
Nokia Solutions and Networks GmbH & Co. KG
T&I IPR Patent Administration
St.-Martin-Straße 76
80240 München (DE)**

(56) References cited:
**EP-A2- 2 239 974          US-A1- 2010 054 231
US-A1- 2010 208 609**

**Description**

FIELD OF THE INVENTION

The invention generally relates to scheduling priority in a communications network. More particularly, the invention relates to priority differentiation of application data streams.

BACKGROUND OF THE INVENTION

During times when a target cell in a mobile communications network becomes congested or highly loaded, limited either by radio or backhaul transport resources, users of the network may become dissatisfied with the quality of experience associated with packet data services, since applications like web pages may take considerably longer to download.

In order to improve the quality of experience, several methods may be employed, for example network requested secondary PDP context, a GGSN initiated PDP context modification procedure, use of multiple PDP contexts, and/or throttling application flows in the core network.

Document EP2239974 describes a method for evaluating data according to a marker assigned to the data; and adjusting a scheduling priority of the data based on a result of the evaluation, wherein adjusting comprises mapping a type of the data to a value of the scheduling priority, and communicating the adjusted scheduling priority.

However, there are drawbacks limiting the usage of these methods for improving the quality of experience, for example that they are either unsupported by many mobile terminals, they introduce extra signalling and the quality of service (QoS) may not be changed too rapidly, they cannot be used for internet applications and/or there is a lack of knowledge about the target cell load in real time.

The invention seeks to address at least some of the problems outlined above.

SUMMARY OF THE INVENTION

The invention is defined by independent claims 1, 13, 14 and 15. Preferred embodiments are defined by dependent claims 2-12 and 16.

Data; i.e., specific data packet(s) or an application, may be given a marker, which can indicate a data traffic type, application type, quality of service and/or activity. The marker can indicate priority and could be, for example, "high" or "low", or "application type A". Marking can be based on previously defined application and subscriber-specific QoS policies and/or monitored application use. The type of data (application) may be evaluated by reading the marker and, according to the given marker, the queuing weight of the data within the radio bearer (including simultaneous applications) and scheduling priority of the radio bearer can be dynamically adjusted. The adjusted scheduling priority may then be communicated to the network and can be used to adjust the scheduling weight of the radio bearer in relation to other radio bearers in the air interface.

This provides the advantage that several simultaneous application flows, carried either within the same or differerent radio bearers, may be prioritised relative to each other (for example non-time critical data traffic may be separated from time critical data traffic so that the time critical traffic is prioritised), thereby improving quality of experience for the user, while at the same time avoiding signalling on network interfaces and eliminating signalling over the radio interface altogether. Furthermore, this method is compatible with all mobile terminals.

Preferably, adjusting comprises changing the scheduling priority, for example decreasing a priority level. This means that if the data is marked as low priority, or marked as an application type that is evaluated as low priority, its scheduling priority is decreased. In this way, different applications may be assigned different scheduling priorities. For example, peer-to-peer (P2P) traffic can be deprioritised during cell congestion in order to provide for faster download of web pages. This provides the advantage that an improved quality of experience can be experienced by the network user.

The scheduling priority of individual IP data packets within a UTRAN radio bearer (RB), as well as the scheduling priority of the radio bearer in the air interface may be adjusted.

In one embodiment of the invention, the scheduling priority is returned to a previous level if a condition changes. For example, if application data had previously been marked as high priority and then been deprioritized, the scheduling priority may be returned to the previous high priority level if conditions change, such as if the level of congestion in the target cell decreases. In this way, application data streams may be dynamically prioritized relative to each other.

Data may be received at the control node from a core network. Evaluating the data type and adjusting the scheduling priority may then be performed at the control node, for example a radio network controller. Marking the data to assign each application/data a marker may be performed using deep packet inspection, either in the core network or in a control node (such as a radio network controller or eNode B) that has integrated deep packet inspection. Alternatively, marking data or applications may be performed in standalone deep packet inspection on an interface such as the Gi or SGi interface.

The marker can be based on the quality of service level and may also indicate a quality of service level of the data or application. The marker may also indicate the application type, in which case the control node may have rules to evaluate priority of the given application type.

Adjusting the scheduling priority can include mapping the data type to a value of the scheduling priority. This mapping of the data type to a value to a value of the scheduling priority may be achieved by calculating a weighted average of scheduling priority values received over last received data packets, for example by using a mapping algorithm. Alternatively, mapping may use configured rules with relative precedence between application types, and adjust scheduling priority according to the application rule with highest precedence seen during a given period of time.

The adjusted scheduling priority can be communicated to a network node, for example a base station, Node B or eNode B. The network node can then process the data or application according to its current scheduling priority.

Embodiments of the invention also provide a control node. The control node includes a processor configured to evaluate data according to a marker assigned to the data and to adjust a scheduling priority according to a result of the evaluation. A transmitter is provided, which is configured to communicate the adjusted scheduling priority.

The control node evaluates received data based on a marker given to the data (application) according to its traffic type, quality of service and/or activity. According to the marker, the scheduling priority of the data/application and radio bearer is then adjusted. The adjusted scheduling priority of the radio bearer is then communicated to the network. This provides the advantage of being able to prioritise several simultaneous application flows which leads to an improved quality of experience for the user, without the need to use signalling on network interfaces and providing for compatibility with all mobile terminals.

Embodiments of the invention further provide a network node. The network node includes a receiver, which is configured to receive data and an adjusted scheduling priority of the data. A scheduler is configured to process the data according to its current scheduling priority. For example, the scheduler may adjust the priority of any given MAC-d queue based on the momentary scheduling priority of the radio bearer assigned by the control node.

Embodiments of the invention further provide a computer program product, which includes a program comprising software code portions being arranged, when run on a processor, to perform evaluating data according to a marker assigned to the data, adjusting a scheduling priority of the data based on a result of the evaluation, and communicating the adjusted scheduling priority.

The computer program product may include a computer-readable medium on which the software code portions can be stored, and/or wherein the program can be directly loadable into a memory of the processor.

The invention will now be described, by way of example only, with reference to specific embodiments, and to the accompanying drawings, in which:

BRIEF DESCRIPTION OF THE DRAWINGS

Figure 1 is a simplified schematic diagram of a communications network;

Figure 2 is a simplified schematic diagram of a network node;

Figure 3 is a simplified schematic diagram of a control node;

Figure 4 is a flow chart illustrating a method according to an embodiment of the invention;

Figure 5 is an illustration of a layer structure in a communications network; and

Figure 6 is an illustration of application of an embodiment of the invention in nodes of a communications network.

DETAILED DESCRIPTION OF EXEMPLARY EMBODIMENTS

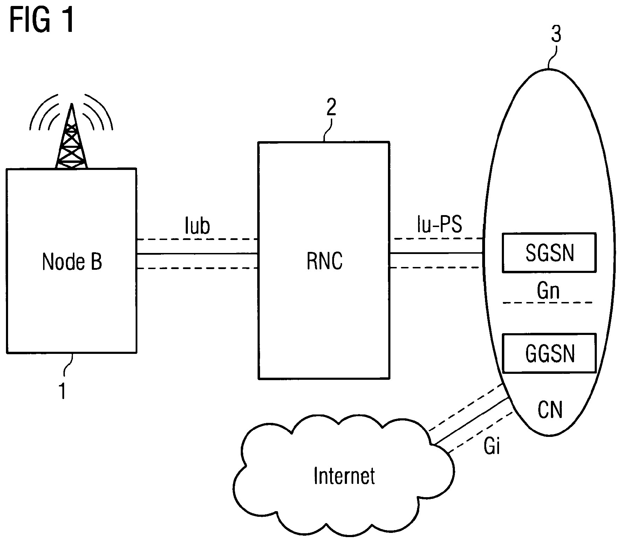

Figure 1 shows a wireless communications network having a base station or Node B 1 controlled by a radio network controller (RNC) 2 over an Iub interface. The Node B 1 and RNC 2 form the UMTS terrestrial radio access network (UTRAN) part of the communications network, which is connected to a core network (CN) 3 over an Iu-PS or Gn interface. However, the examples described below may also apply to an LTE radio network, in which case the Node B 1 and RNC 2 may be replaced by an eNode B combining both functionalities of the Node B and the RNC.

In this example, the CN 3 is a packet switched core network providing access to the internet via a Gi interface. The CN 3 may include a serving GPRS support node (SGSN) and a gateway GPRS support node (GGSN) interfaced over a Gn interface. The CN 3 may also include a public data network gateway (PDN-GW) and a serving gateway (S-GW).

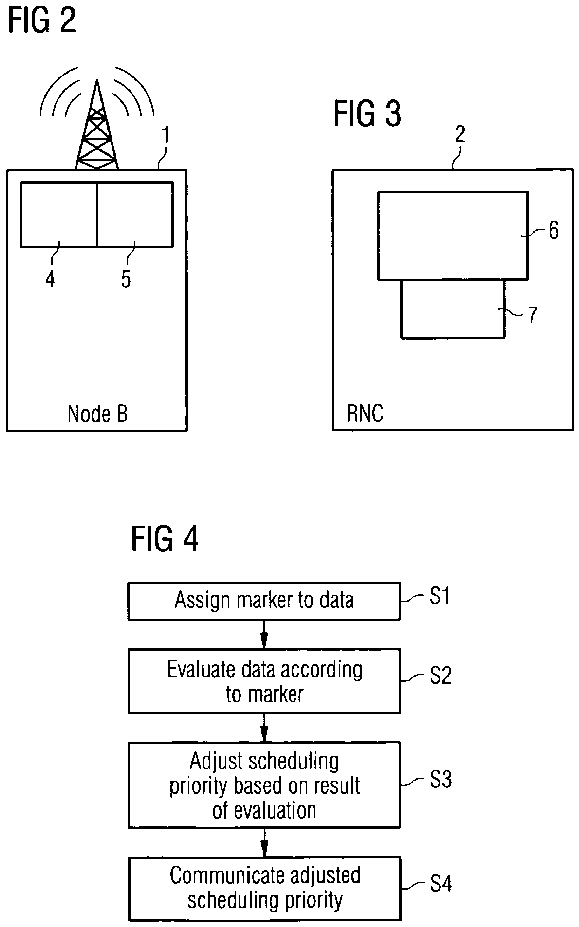

The Node B 1 includes a transmit/receive unit 4 and a scheduler 5, as shown in Figure 2 and the RNC 2 includes a transmit/receive unit 6 and a processor 7, as shown in Figure 3.

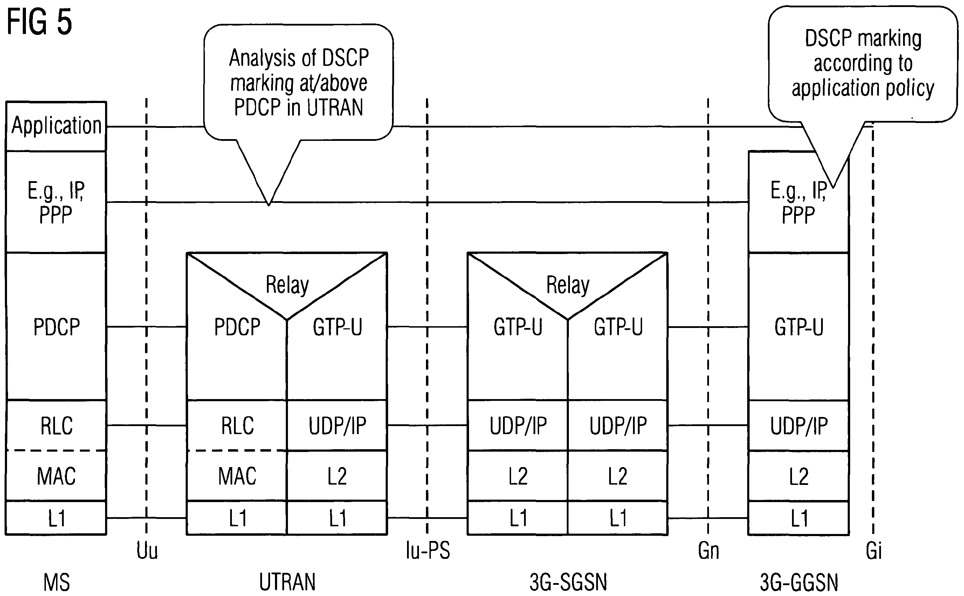

Figure 4 shows a flow chart illustrating a method according to one embodiment. In step S1, an IP data packet received by the network from the internet is marked, which may take place in the CN 3 or in the RNC 2, or in fact in any part of the network before the Packet Data Convergence Protocol (PDCP) layer in the UTRAN, as described in more detail below. The marker indicates priority (for example "high" or "low") or application type of the data and may be placed in a dedicated header field of the IP data packet, as shown in Figure 5.

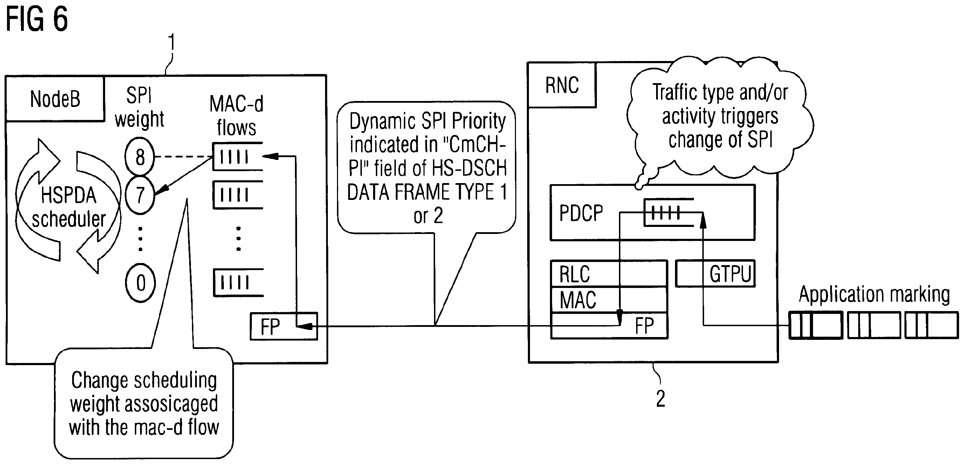

In step S2, the marked data packets are received at the RNC 3, as shown in Figure 6. The processor 7 in the RNC 3 evaluates each data packet in the PDCP layer by analysing the marker assigned to the data in step S1. However, this evaluation may take place in any part of the UTRAN network at or above the PDCP layer, as illustrated in Figure 5.

In Step S3, the RNC 3 changes the order of the IP data packets according to priority and/or adjusts the scheduling priority of the entire UTRAN radio bearer based on the marker in the header of the data packet. For example, if the marker is "low", this means that the data traffic type and/or activity is such that the data associated with this particular application is low priority and the RNC 3 "demotes" the IP data packet to have a lower scheduling priority within the UTRAN radio bearer than its previous scheduling priority for that particular application or type of data. It is to be noted that if conditions change, for example the target cell becomes less busy or congested, the application data stream may have its priority dynamically restored or adjusted back by the RNC 3 to its previous level before it was demoted.

Conversely, if the marker is "high", this indicates that the data associated with the application is high priority and the RNC 3 raises the scheduling priority of the IP data packet.

IP data packets of different priority can be prioritized e.g. by placing them into queues with different scheduling priority and/or weight before they are scheduled into the MAC protocol layer within the RNC 3. This means that several application data streams in the same radio bearer may be dynamically prioritised relative to each other. For example, a web-based application may be given higher priority than a peer-to-peer application within the UTRAN radio bearer.

The RNC 3 may then also change or adjust the scheduling priority of the UTRAN radio bearer according to the priority mix of the IP data packets received recently or buffered currently.

The adjusted scheduling priority of the UTRAN radio bearer is indicated by a scheduling priority indicator (SPI) associated with the Frame Protocol PDU carrying the data packet or part of it. A change of SPI may be triggered in the PDCP layer in the RNC 3 by the data traffic type and/or activity as indicated by the marker in the header of the data packet.

In step S4, the transmit/receive unit 6 of the RNC 3 communicates the adjusted SPI to the Node B 1, for example in the "CmCH-PI" field of a HS-DSCH DATA FRAME TYPE 1 or 2 as illustrated in Figure 6.

The Node B 1 may then receive the adjusted SPI at the transmit/receive unit 4 and the scheduler 5 can change the scheduling weight associated with the MAC-d flow according to the SPI associated with each of the application data streams.

In one embodiment, deep packet inspection (DPI) may be used to detect and prioritize applications. In the following, Differentiated Services Code Point (DSCP) marking is used as an example of the marker assigned to IP data packets. However, other dedicated header fields, for example contained in a GPRS tunnelling protocol GTP-U Extension Header, may be used as well.

DPI marks priority using DSCP code points to an inner IP packet (the end-to-end IP packet between a user's terminal and another IP endpoint outside the public land mobile network (PLMN)). The DSCP code points are stored in a field of the IP header. This code point information is utilized in or above the PDCP protocol layer in the RNC 3, which then prioritizes application flows and adjusts the SPI of the UTRAN radio bearer and transfers the information containing the adjusted SPI to the Node B 1 in real time.

An advantage of marking the DSCP field of the inner IP packet is that the marking can occur in any part of the network before the PDCP layer in the UTRAN.

For example, the IP packet could be marked in a GGSN/PDN-GW that has integrated DPI; in a S-GW that has integrated DPI; in the RNC 3, I-HSPA or eNB (in the case of an LTE network) that has integrated DPI. Alternatively, the IP packet could be marked in standalone DPI on the Gi or SGi interface.

Furthermore, changes to outer IP packet DSCP code points (the GTP tunnel IP header DSCP) on Gn or Iu-PS transport or the SGSN do not disturb classification of packets. In addition, inner IP packet DSCP is visible to and interpreted by the UTRAN only, which enables definition of usage and interpretation of 6-bit DSCP code independent of changes in standardization.

The SPI information is passed to the Node B 1 HSPA scheduling in the CmCH-PI (Common channel priority indication) field of an HS-DSCH data frame (type 1 or 2).

As a result, HSDPA scheduling adjusts the priority of any given MAC-d queue based on the CmCH-PI field of an HS-DSCH data frame. For example, the priority of the MAC-d queue may be defined by the packet at the head of the queue. Alternatively, the priority of the MAC-d queue may be defined by the highest priority MAC PDU in the queue. High priority applications are then preferred, which means that a user is able to experience a faster download time for a web page, for example, resulting in an improved QoE.

Further, HSUPA scheduling may adjust the priority of uplink E-DCH channels based on the CmCH-PI field of an HS-DSCH data frame.

The order of MAC PDUs for a given UTRAN radio bearer (RB) needs to be preserved, otherwise the RLC layer in Acknowledge mode would misinterpret the reordered MAC PDUs as lost and initiate unnecessary retransmissions, which would adversely affect connection quality. Therefore, MAC PDUs of a RB are maintained in a single queue and only the priority of the entire queue is adjusted by the Node B 1 (instead of placing individual MAC PDUs into separate priority queues indicated by the CmCH-PI field of FP HS-DSCH DATA FRAME that carried them).

In the case of E-UTRAN or I-HSPA, the interface between the PDCP and the cell MAC scheduler may be internal and therefore there is no need to adapt to any specific standard to carry the scheduling priority. Uplink (HSUPA) scheduling in the Node B 1 may use the same priority as downlink scheduling.

In one embodiment, the PDCP layer (or layers above the PDCP layer) in the RNC 3 may include an algorithm, which translates a pattern of DSCP code points in user IP data packets into an SPI level. It is assumed that changing the SPI is not normally performed for every received downlink user packet. This is because there is assumed to be a short MAC-d queue in the Node B1 and therefore priority changes at individual packet level are not effective. In summary, the algorithm follows a DSCP code point from a set of latest downlink data packets and adjusts the SPI according to a formula.

In one embodiment, an algorithm for adjusting the SPI may be implemented as follows:

There is a mapping from a DSCP code point to a certain target SPI level. This may be absolute or relative to the default SPI level evaluated from 3GPP Rel99 QoS parameters of the radio access bearer.

The algorithm follows the target SPI level of recent data packets, limited by a window which may be defined, for example, as a fixed number of transmission time interval (TTI) time slots, or an amount of data received.

The algorithm calculates a weighted average of target SPI values over the window, using the length of each user IP data packet (PDCP SDUs) as the weight.

The weighted average of target SPI values over the last window is used as the actual SPI value which is sent to the Node B 1 in the CmCH-PI field of FP HS-DSCH DATA FRAME (or over an internal interface in case of I-HSPA or eNB).

DSCP, Rel99 QoS $\rightarrow$ Target SPI

$$Actual\ SPI = \frac{\sum_{n} (\text{Target SPI}) \cdot (\text{IP packet length})}{\sum_{n} \text{IP packet length}}$$

where n is number of packets that were received in measurement window

Note that the algorithm is only an example, and any variants on the above are possible, as long as there is a mapping from the DSCP value to the SPI value. The details of algorithm may differ, for example with respect to how it reacts to a mixture of data packets having different DSCP codes and packet lengths or how quickly it reacts by changing the actual SPI based on a change of DSCP.

For the purpose of the present invention as described hereinabove, it should be noted that

- method steps likely to be implemented as software code portions and being run using a processor at a network control element or terminal (as examples of devices, apparatuses and/or modules thereof, or as examples of entities including apparatuses and/or modules therefore), are software code independent and can be specified using any known or future developed programming language as long as the functionality defined by the method steps is preserved;

- generally, any method step is suitable to be implemented as software or by hardware without changing the idea of the embodiments and its modification in terms of the functionality implemented;

- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;

- devices, units or means (e.g. the above-defined apparatuses and network devices, or any one of their respective units/means) can be implemented as individual devices, units or means, but this does not exclude that they are implemented in a distributed fashion throughout the system, as long as the functionality of the device, unit or means is preserved;
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

The terms "user equipment (UE)" and "mobile station" described herein may refer to any mobile or stationary device including a mobile telephone, a computer, a mobile broadband adapter, a USB stick for enabling a device to access to a mobile network, etc.

The exemplary embodiments of the invention have been described above with reference to a 3GPP UMTS network. However, the above-described examples may be applied to any wireless communications network.

Although the invention has been described hereinabove with reference to specific embodiments, it is not limited to these embodiments, and no doubt further alternatives will occur to the skilled person, which lie within the scope of the invention as claimed.

LIST OF ABBREVIATIONS

CmCH-PI - Common Transport Channel Priority Indicator
DPI - Deep Packet Inspection
DSCP - Differentiated Services Code Point
FP - Frame Protocol
GTP - GPRS Tunnelling Protocol
GGSN - Gateway GPRS Support Node
GPRS - General Packet Radio Service
HSDPA - High Speed Downlink Packet Access
HS-DSCH - High Speed Downlink Shared Channel
HSPA - High Speed Packet Access
IP - Internet Protocol
LTE - Long Term Evolution
MAC - Medium Access Control
PDCP - Packet Data Convergence Protocol
PDN-GW - Public Data Network Gateway
PDP - Packet Data Protocol
PLMN - Public Land Mobile Network
QoE - Quality of Experience
QoS - Quality of Service
RAB - Radio Access Bearer
RNC - Radio Network Controller
SGSN - Serving GPRS Support Node
S-GW - Serving Gateway
SPI - Scheduling Priority Indicator

TTI - Transmission Time Interval
UMTS - Universal Mobile Telecommunications System
UTRAN - UMTS Terrestrial Radio Access Network

**Claims**

1. A method, comprising:

    evaluating data according to a marker assigned to the data;
    adjusting a scheduling priority of the data based on a result of the evaluation, wherein adjusting comprises mapping a type of the data to a value of the scheduling and communicating the adjusted scheduling priority, **characterised in that** the mapping comprises calculating a weighted average of scheduling priority values received over one or more last received data packet.

2. The method according to claim 1, wherein adjusting comprises changing the scheduling priority.

3. The method according to claim 2, wherein changing the scheduling priority comprises decreasing a priority level.

4. The method according to any of claims 1 to 3, further comprising returning the scheduling priority to a previous level if a condition changes.

5. The method according to any of claims 1 to 4, wherein evaluating and adjusting is performed at a control node.

6. The method according to any of claims 1 to 5, wherein the marker is assigned using deep packet inspection.

7. The method according to claim 5, wherein the data is received at the control node from a core net-work.

8. The method according to claim 7, wherein the marker is assigned by the core network.

9. The method according to any of claims 1 to 8, wherein the marker is a priority marking.

10. The method according to any of claims 1 to 9, wherein the marker indicates a quality of service level.

11. The method according to any of claims 1 to 10, wherein the adjusted scheduling priority is communicated to a network node.

12. The method according to claim 11, further comprising processing data according to its current scheduling priority.

13. A control node, (2) comprising:

    a processor (7) configured to evaluate data according to a marker assigned to the data and to adjust a scheduling priority of the data based on a result of the evaluation; and
    a transmitter (6) configured to communicate the adjusted scheduling priority;

    wherein adjusting comprises the processor being configured to map a type of the data to a value of the scheduling priority, **characterised in** tha the mapping comprises calculating a weighted average of scheduling priority values received over one or more last received data packet.

14. A network node, (1) comprising:

    a receiver (4) configured to receive data and an adjusted scheduling priority of the data; and
    a scheduler (5) configured to schedule the data according to its current scheduling priority;

    wherein the adjusted scheduling priority of the data comprises mapping a type of the data to a value of the scheduling priority, **characterised in that** the mapping comprises calculating a weighted average of scheduling priority values received over one or more last received data packet.

15. A computer program product, including a pro-gram comprising software code portions being arranged, when run on a processor, to perform evaluating data ac-cording to a marker assigned to the data, adjusting a scheduling priority of the data based on a result of the evaluation, and communicating the adjusted scheduling priority, wherein adjusting comprises mapping a type of the data to a value of the scheduling priority, **characterised in that** the mapping comprises calculating a weighted average of scheduling priority values received over one or more last received data packet.

16. The computer program product according to claim 15, wherein the computer program product comprises a computer-readable medium on which the software code portions are stored, and/or wherein the program is directly loadable into a memory of the processor.

**Patentansprüche**

1. Verfahren, das die folgenden Schritte umfasst:

   Bewerten von Daten entsprechend einer Markierung, die den Daten zugewiesen ist;
   Einstellen einer Planungspriorität der Daten beruhend auf einem Resultat der Bewertung, wobei das Einstellen das Abbilden eines Typs der Daten auf einen Wert der Planung und Übermittlung der eingestellten Planungspriorität aufweist, **dadurch gekennzeichnet, dass** das Abbilden das Berechnen eines gewichteten Durchschnitts der Planungsprioritätswerte aufweist, die über ein oder mehrere letzte empfangene Datenpakete empfangen werden.

2. Verfahren nach Anspruch 1, wobei das Einstellen das Ändern der Planungspriorität aufweist.

3. Verfahren nach Anspruch 2, wobei das Ändern der Planungspriorität das Senken eines Prioritätsniveaus aufweist.

4. Verfahren nach einem der Ansprüche 1 bis 3, das ferner das Zurückstufen der Planungspriorität auf ein vorhergehendes Niveau aufweist, wenn sich eine Bedingung ändert.

5. Verfahren nach einem der Ansprüche 1 bis 4, wobei das Bewerten und Einstellen an einem Steuerknoten durchgeführt wird.

6. Verfahren nach einem der Ansprüche 1 bis 5, wobei die Markierung unter Verwendung einer "Deep Packet Inspection" zugewiesen wird.

7. Verfahren nach Anspruch 5, wobei die Daten am Steuerknoten von einem Kernnetzwerk empfangen werden.

8. Verfahren nach Anspruch 7, wobei die Markierung durch das Kernnetzwerk zugewiesen wird.

9. Verfahren nach einem der Ansprüche 1 bis 8, wobei die Markierung eine Prioritätsmarkierung ist.

10. Verfahren nach einem der Ansprüche 1 bis 9, wobei die Markierung ein Niveau der Dienstqualität anzeigt.

11. Verfahren nach einem der Ansprüche 1 bis 10, wobei die eingestellte Planungspriorität an einen Netzwerkknoten übermittelt wird.

12. Verfahren nach Anspruch 11, das ferner das Verarbeiten von Daten entsprechend ihrer gegenwärtigen Planungspriorität aufweist.

13. Steuerknoten (2), der Folgendes umfasst:

    einen Prozessor (7), der konfiguriert ist, Daten entsprechend einer Markierung zu bewerten, die den Daten zugewiesen ist, und eine Planungspriorität der Daten beruhend auf einem Resultat der Bewertung einzustellen; und
    einen Sender (6), der konfiguriert ist, die eingestellte Planungspriorität zu übermitteln;

    wobei das Einstellen umfasst, dass der Prozessor konfiguriert ist, einen Typ der Daten auf einen Wert der Planungspriorität abzubilden, **dadurch gekennzeichnet, dass** das Abbilden das Berechnen eines gewichteten Durchschnitts der Planungsprioritätswerte aufweist, die über ein oder mehrere letzte empfangene Datenpakete empfangen werden.

14. Netzwerkknoten, der Folgendes umfasst:

einen Empfänger (4), der konfiguriert ist, Daten und eine eingestellte Planungspriorität der Daten zu empfangen; und

einen Scheduler (5), der konfiguriert ist, die Daten entsprechend ihrer gegenwärtigen Planungspriorität zu planen;

wobei die eingestellte Planungspriorität der Daten das Abbilden eines Typs der Daten auf einen Wert der Planungspriorität aufweist, **dadurch gekennzeichnet, dass** das Abbilden das Berechnen eines gewichteten Durchschnitts der Planungsprioritätswerte aufweist, die über ein oder mehrere letzte empfangene Datenpakete empfangen werden.

15. Computerprogrammprodukt, das ein Programm umfasst, das Softwarecodeabschnitte aufweist, die eingerichtet sind, wenn sie auf einem Prozessor ausgeführt werden, das Bewerten von Daten entsprechend einer Markierung, die den Daten zugewiesen ist, das Einstellen einer Planungspriorität der Daten beruhend auf einem Resultat der Bewertung und die Übermittlung der eingestellten Planungspriorität durchzuführen, wobei das Einstellen das Abbilden eines Typs der Daten auf einen Wert der Planungspriorität aufweist, **dadurch gekennzeichnet, dass** das Abbilden das Berechnen eines gewichteten Durchschnitts der Planungsprioritätswerte aufweist, die über ein oder mehrere letzte empfangene Datenpakete empfangen werden.

16. Computerprogrammprodukt nach Anspruch 15, wobei das Computerprogrammprodukt ein computerlesbares Medium aufweist, auf dem die Softwarecodeabschnitte gespeichert sind, und/oder wobei das Programm direkt in einen Speicher des Prozessors ladbar ist.

**Revendications**

1. Un procédé, comprenant :

l'évaluation de données en fonction d'un marqueur attribué aux données, l'ajustement d'une priorité de planification des données en fonction d'un résultat de l'évaluation, l'ajustement comprenant l'appariement d'un type des données à une valeur de la planification, et la communication de la priorité de planification ajustée, **caractérisé en ce que** l'appariement comprend

le calcul d'une moyenne pondérée de valeurs de priorité de planification reçues par l'intermédiaire d'un ou de plusieurs paquets de données reçues en dernier.

2. Le procédé selon la revendication 1, dans lequel l'ajustement comprend la modification de la priorité de planification.

3. Le procédé selon la revendication 2, dans lequel la modification de la priorité de planification comprend la diminution d'un niveau de priorité.

4. Le procédé selon l'une quelconque des revendications 1 à 3, comprenant en outre le retour de la priorité de planification à un niveau antérieur si une condition change.

5. Le procédé selon l'une quelconque des revendications 1 à 4, dans lequel l'évaluation et l'ajustement sont exécutés au niveau d'un noeud de commande.

6. Le procédé selon l'une quelconque des revendications 1 à 5, dans lequel le marqueur est attribué au moyen d'une inspection de paquet approfondie.

7. Le procédé selon la revendication 5, dans lequel les données sont reçues au niveau du noeud de commande à partir d'un réseau noyau.

8. Le procédé selon la revendication 7, dans lequel le marqueur est attribué par le réseau noyau.

9. Le procédé selon l'une quelconque des revendications 1 à 8, dans lequel le marqueur est un marquage de priorité.

10. Le procédé selon l'une quelconque des revendications 1 à 9, dans lequel le marqueur indique un niveau de qualité de service.

11. Le procédé selon l'une quelconque des revendications 1 à 10, dans lequel la priorité de planification ajustée est communiquée à un noeud de réseau.

12. Le procédé selon la revendication 11, comprenant en outre le traitement de données en fonction de leur priorité de planification actuelle.

13. Un noeud de commande (2) comprenant :

   un processeur (7) configuré de façon à évaluer des données en fonction d'un marqueur attribué aux données et à ajuster une priorité de planification des données en fonction d'un résultat de l'évaluation, et
   un émetteur (6) configuré de façon à communiquer la priorité de planification ajustée,

   l'ajustement comprenant le processeur configuré de façon à apparier un type des données à une valeur de la priorité de planification, **caractérisé en ce que** l'appariement comprend le calcul d'une moyenne pondérée de valeurs de priorité de planification reçues par l'intermédiaire d'un ou de plusieurs paquets de données reçus en dernier.

14. Un noeud de réseau (1) comprenant :

   un récepteur (4) configuré de façon à recevoir des données et une priorité de planification ajustée des données, et
   un planificateur (5) configuré de façon à planifier les données en fonction de leur priorité de planification actuelle, la priorité de planification ajustée des données comprenant l'appariement d'un type des données à une valeur de la priorité de planification, **caractérisé en ce que** l'appariement comprend le calcul d'une moyenne pondérée de valeurs de priorité de planification reçues par l'intermédiaire d'un ou de plusieurs paquets de données reçus en dernier.

15. Un produit de programme informatique comprenant un programme contenant des parties de code logiciel qui sont agencées, lorsqu'elles sont exécutées sur un processeur, de façon à exécuter l'évaluation de données en fonction d'un marqueur attribué aux données, l'ajustement d'une priorité de planification des données en fonction d'un résultat de l'évaluation et la communication de la priorité de planification ajustée, l'ajustement comprenant l'appariement d'un type des données à une valeur de la priorité de planification, **caractérisé en ce que** l'appariement comprend le calcul d'une moyenne pondérée de valeurs de priorité de planification reçues par l'intermédiaire d'un ou de plusieurs paquets de données reçus en dernier.

16. Le produit de programme informatique selon la revendication 15, dans lequel le produit de programme informatique comprend un support lisible par ordinateur sur lequel les parties de code logiciel sont conservées en mémoire et/ou dans lequel le programme peut être chargé directement dans une mémoire du processeur.

# FIG 1

# FIG 2

Node B

# FIG 3

RNC

# FIG 4

| | |
|---|---|
| Assign marker to data | S1 |
| Evaluate data according to marker | S2 |
| Adjust scheduling priority based on result of evaluation | S3 |
| Communicate adjusted scheduling priority | S4 |

# FIG 5

Analysis of DSCP marking at/above PDCP in UTRAN

DSCP marking according to application policy

| MS | | UTRAN | | 3G-SGSN | | 3G-GGSN |
|---|---|---|---|---|---|---|
| Application | | | | | | |
| E.g., IP, PPP | | | | | | E.g., IP, PPP |
| PDCP | | PDCP (Relay) | GTP-U | GTP-U (Relay) | GTP-U | GTP-U |
| RLC | | RLC | UDP/IP | UDP/IP | UDP/IP | UDP/IP |
| MAC | | MAC | L2 | L2 | L2 | L2 |
| L1 | | L1 | L1 | L1 | L1 | L1 |

Uu | Iu-PS | Gn | Gi

EP 2 700 203 B1

# FIG 6

NodeB — SPI weight — MAC-d flows

8 ⟶ |||||
7 ⟶ |||||
⋮
0 — |||||

HSPDA scheduler

FP

Change scheduling weight assosicaged with the mac-d flow

Dynamic SPI Priority indicated in "CmCH-PI" field of HS-DSCH DATA FRAME TYPE 1 or 2

RNC

Traffic type and/or activity triggers change of SPI

PDCP |||||

RLC
MAC
FP

GTPU

Application marking

EP 2 700 203 B1

**EP 2 700 203 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2239974 A